# FASCICULE DE BREVET EUROPEEN

(11) **EP 0 914 566 B1**
(45) Date de publication et mention de la délivrance du brevet: **30.06.2004**
(21) Numéro de dépôt: 98928374.2
(22) Date de dépôt: 28.05.1998
(51) Int. Cl.: F16D 13/58, F16D 13/75

(54) **MECANISME D'EMBRAYAGE POUR EMBRAYAGE A FRICTION A FAIBLE EFFORT DE DEBRAYAGE**
REIBUNGSKUPPLUNG MIT SCHWACHER KRAFT AUFTRETENDER AUSKUPPLUNGSVORRICHTUNG
CLUTCH MECHANISM FOR CLUTCH FRICTION WITH LOW DECLUTCHING EFFORT

(30) Priorité: 30.05.1997 FR 9706656
(43) Date de publication de la demande: 12.05.1999
(73) Titulaire: VALEO EMBRAYAGES s.a.s., 80009 Amiens Cedex 1 (FR)
(72) Inventeur: LOPEZ, Carlos, E-Madrid 28005 (ES)
(74) Mandataire: Lemaire, Marc
(86) Numéro de dépôt international: PCT/FR1998/001067
(87) Numéro de publication internationale: WO 1998/054478

(56) Documents cités:
- DE-A- 4 201 132
- FR-A- 2 688 558
- FR-A- 2 753 503
- FR-A- 2 753 758
- GB-A- 2 286 640
- GB-A- 2 294 301
- GB-A- 2 310 898

## Description

La présente invention concerne les embrayages à friction à faible effort de débrayage, notamment pour véhicules automobiles, et se rapporte plus particulièrement au mécanisme d'embrayage que comporte un tel embrayage, voir par exemple GB-A-2 294 301.

Ainsi qu'on le sait, dans un embrayage classique intercalé entre un arbre menant et un arbre mené, un diaphragme prend appui sur le fond d'un couvercle, fixé à un volant d'entraînement en rotation, pour déplacer un plateau de pression en direction dudit volant, formant plateau de réaction, afin de serrer les garnitures de friction d'une friction d'embrayage entre lesdits plateaux de pression et de réaction.

Le volant d'entraînement est solidaire en rotation d'un premier arbre, tel qu'un arbre menant, tandis que la friction d'embrayage présente à sa périphérie interne un moyeu pour son calage en rotation sur un deuxième arbre, tel qu'un arbre mené.

L'embrayage est donc normalement engagé, ou embrayé, avec transmission de couple entre les arbres menant et mené.

Pour désengager, ou débrayer, l'embrayage, il faut, à l'aide d'une butée de débrayage, agir axialement en poussant, dans le cas d'un embrayage du type poussé, sur l'extrémité interne des doigts du diaphragme pour faire pivoter ledit diaphragme et annuler l'effort qu'exerce ce diaphragme sur le plateau de pression mobile axialement afin de libérer les garnitures de friction. Le couple n'est alors plus transmis de l'arbre menant à l'arbre mené, car les garnitures de friction ne sont plus serrées entre les plateaux de pression et de réaction solidaires en rotation du couvercle de forme creuse.

Usuellement, le couvercle, le plateau de pression et le diaphragme forment un ensemble unitaire appelé mécanisme d'embrayage que l'on vient rapporter par son couvercle sur le volant, des languettes élastiques liant en rotation, avec mobilité axiale, le plateau de pression au couvercle. Le diaphragme, ainsi qu'on le sait, est troué centralement et comporte une partie périphérique externe en forme de rondelle Belleville prolongée vers l'intérieur par une partie centrale fragmentée en doigts radiaux par des fentes. Ce diaphragme, par sa partie rondelle Belleville, prend appui sur le couvercle et sur le plateau de pression. Ainsi, le dispositif débrayeur de l'embrayage, qui permet de contrecarrer à volonté l'action des moyens élastiques embrayeurs, est constitué par les doigts du diaphragme sur l'extrémité interne desquels agit la butée de débrayage, tandis que la rondelle Belleville du diaphragme constitue des moyens élastiques embrayeurs à action axiale pour serrer les garnitures de friction entre les plateaux de pression et de réaction et donc solliciter axialement le plateau de pression en direction opposée au fond du couvercle.

A l'état libre, ce diaphragme a une forme tronconique. Une fois monté dans l'embrayage, sa rondelle Belleville est montée sous précontrainte et est plus ou moins aplatie. Lors de l'opération de débrayage, ou désengagement de l'embrayage, on modifie la conicité de sa rondelle Belleville.

Ainsi qu'on le sait, la courbe caractéristique de ce diaphragme, qui représente la force exercée en fonction de la course de débrayage, par exemple ramenée au niveau de l'extrémité interne des doigts du diaphragme, est déterminée par les dimensions de sa rondelle Belleville, notamment par le rapport entre la hauteur du tronc de cône de la rondelle Belleville à l'état libre et l'épaisseur du diaphragme. Cette courbe caractéristique passe par un maximum.

Ainsi, la force à exercer sur l'extrémité interne des doigts du diaphragme, pendant l'opération de débrayage, augmente jusqu'à un maximum, diminue graduellement jusqu'à un minimum, puis augmente à nouveau.

La différence entre le maximum et le minimum peut être importante. Pour plus de précisions sur cette courbe caractéristique, on se reportera par exemple au document FR-A-1 392 569.

Dans le document FR-A-1 392 569 on a prévu un dispositif élastique de progressivité disposé à l'extérieur de la friction d'embrayage pour éviter de passer par le maximum précité lors de la course de débrayage. Ce dispositif est monté en série avec la rondelle Belleville du diaphragme et présente une force élastique notablement inférieure à celle de la rondelle Belleville. Ce dispositif a une course limitée entre une position de précontrainte où sa force est maximum et une position de contrainte où sa force est minimum.

Avec cette disposition, on obtient un effort de débrayage globalement croissant au niveau de la butée de débrayage.

On ne peut obtenir lors de la course de débrayage une assistance aussi grande que souhaitée, le dispositif de progressivité diminuant la charge exercée par le diaphragme sur le plateau de pression lors du débrayage.

Les courbes de charge du dispositif de progressivité, usuellement monté au sein de la friction d'embrayage, et du diaphragme ont des formes ne permettant pas de les combiner pour obtenir une forte assistance au débrayage, en particulier si l'on veut respecter des courses et efforts de débrayages compatibles avec les commandes de débrayage actuelles. Par ailleurs, la forme de la courbe du dispositif de progressivité évolue très rapidement avec la vie de l'embrayage, ceci annulant d'autant plus l'assistance au débrayage que le niveau d'assistance demandé est élevé. Pour éviter le vieillissement de la courbe du dispositif d'assistance, ii est préférable de placer celui-ci en un endroit où sa courbe de raideur restera stable dans le temps, et, en particulier, en un endroit placé en dehors de la zone de progressivité de la friction où le contact garnitures et le phénomène d'incrustations évoluent et font évoluer la courbe de progressivité.

On peut alors songer à faire intervenir un ressort d'assistance en parallèle avec le diaphragme. Dans ce cas, le ressort d'assistance, par exemple en forme de rondelle Belleville, peut prendre appui sur le couvercle et sur l'extrémité interne des doigts du diaphragme. En position embrayage engagé, il peut alors exercer une force minimum, puis, sa conicité variant, exercer une force d'assistance lors de l'opération de débrayage. Il faut donc que cette force d'assistance soit minimum en position embrayage engagé tout au long de la durée de vie de l'embrayage.

L'idéal pour ce type de réalisation est de faire appel à un dispositif de réglage, dit dispositif de rattrapage d'usure, qui maintient le diaphragme toujours globalement dans la même position, quelle que soit l'usure des garnitures de friction de l'embrayage et/ou des faces de friction des plateaux de pression et de réaction, pour que le ressort d'assistance exerce, en toute circonstance lors de la durée de vie de l'embrayage, une très faible force lorsque l'embrayage est en position engagée ou embrayée.

La présente invention a pour objet de créer, de manière simple et économique, un embrayage à friction à faible effort de débrayage faisant appel également à des ressorts agissant en parallèle sans diminuer notablement, tout au long de la durée de vie de l'embrayage, la force de serrage des garnitures de friction à l'état embrayage engagé, grâce à la présence d'un dispositif de rattrapage d'usure.

On a déjà proposé des mécanismes d'embrayages de ce genre ; un tel mécanisme est par exemple décrit dans le document FR-A-2 728 638. Malheureusement, ce mécanisme présente l'inconvénient de nécessiter un couvercle spécifique ; par ailleurs, il est encombrant axialement.

La présente invention a pour but de proposer un mécanisme du genre ci-dessus ne présentant pas ces inconvénients.

Ainsi, selon l'invention, un mécanisme d'embrayage pour embrayage à friction, notamment pour véhicules automobiles, comportant un couvercle avec un fond d'orientation transversale et des moyens de fixation pour fixation du mécanisme d'embrayage sur un volant d'entraînement en rotation, un plateau de pression présentant frontalement une face de friction pour coopération avec une friction d'embrayage, des moyens pour liaison en rotation, avec mobilité axiale, du plateau de pression avec le couvercle, et, interposé entre le plateau de pression et le fond du couvercle, un diaphragme ayant une partie périphérique externe sollicitant axialement le plateau de pression en direction opposée du fond du couvercle et prolongée vers l'intérieur par des doigts pour contrecarrer à volonté l'action de ladite partie périphérique, une rondelle élastique d'assistance agissant sur les doigts du diaphragme dans le sens du débrayage en prenant appui sur le couvercle, le mécanisme étant équipé d'un dispositif de rattrapage d'usure d'au moins des garnitures de la friction d'embrayage, est caractérisé par le fait que la rondelle d'assistance est disposée axialement entre le plateau de pression et le diaphragme,
les caractéristiques élastiques de la rondelle d'assistance étant choisies en sorte que, lorsque l'embrayage est embrayé, la friction d'embrayage étant neuve, l'action exercée par la rondelle d'assistance est très faible, voire nulle, et
en sorte que, pendant l'opération de débrayage, l'action exercée par la rondelle d'assistance croît puis décroît jusqu'à une valeur très faible voire nulle l'embrayage étant débrayé.

Avantageusement, les doigts du diaphragme étant séparés par des fentes radiales qui débouchent dans des trous placés à la périphérie interne de la partie périphérique du diaphragme, la rondelle d'assistance est située globalement radialement à l'intérieur de la zone délimitée par les trous du diaphragme.

De préférence, la rondelle d'assistance prend appui sur le couvercle par l'intermédiaire d'une rondelle jonc solidarisée au fond du couvercle par des rivets qui traversent des trous du diaphragme.

Avantageusement, l'embrayage étant du type poussé, la rondelle d'assistance prend appui sur un bord qui fait face au plateau de pression et que présente la rondelle jonc à sa périphérie interne, et est fixée aux doigts du diaphragme, par exemple par des rivets.

Avantageusement, l'embrayage étant du type tiré, la rondelle d'assistance prend appui sur un bord qui fait face au fond du couvercle et que présente la rondelle jonc à sa périphérie interne.

De préférence, la rondelle d'assistance prend appui sur le couvercle par l'intermédiaire des têtes de rivets qui traversent des trous du diaphragme.

Avantageusement, l'embrayage étant du type poussé, la rondelle d'assistance prend appui sur un bord qui fait face au plateau de pression et que présente les têtes des rivets.

De préférence, l'embrayage étant du type tiré, la rondelle d'assistance prend appui sur un bord qui fait face au fond du couvercle et que présente les têtes des rivets.

De préférence, l'embrayage étant du type tiré, la rondelle d'assistance est solidaire des rivets par sa périphérie externe.

Avantageusement, la rondelle d'assistance est découpée à sa périphérie interne pour constituer des dents coopérant avec les doigts du diaphragme.

La description qui va suivre illustre l'invention en regard des dessins annexés dans lesquels :
- la figure 1 est une demi-vue en coupe axiale d'un mécanisme d'embrayage selon l'invention du type poussé en position embrayage engagé ;
- la figure 2 est une demi-vue partielle en coupe axiale d'une variante de mécanisme par rapport à la figure 1 ;
- la figure 3 est une demi-vue en coupe axiale d'un mécanisme selon l'invention du type tiré ;
- la figure 4 est une demi-vue en coupe axiale montrant une variante de mécanisme d'embrayage selon l'invention, par rapport à la figure 3 ;
- la figure 5 est une vue partielle de droite par rapport à la figure 4 montrant uniquement le diaphragme, la rondelle d'assistance et les rivets ;
- la figure 6 correspond à une variante des figures 3 ou 4 ;
- la figure 7 est une vue partielle de droite par rapport à la figure 6 montrant uniquement le diaphragme, la rondelle d'assistance et les rivets.

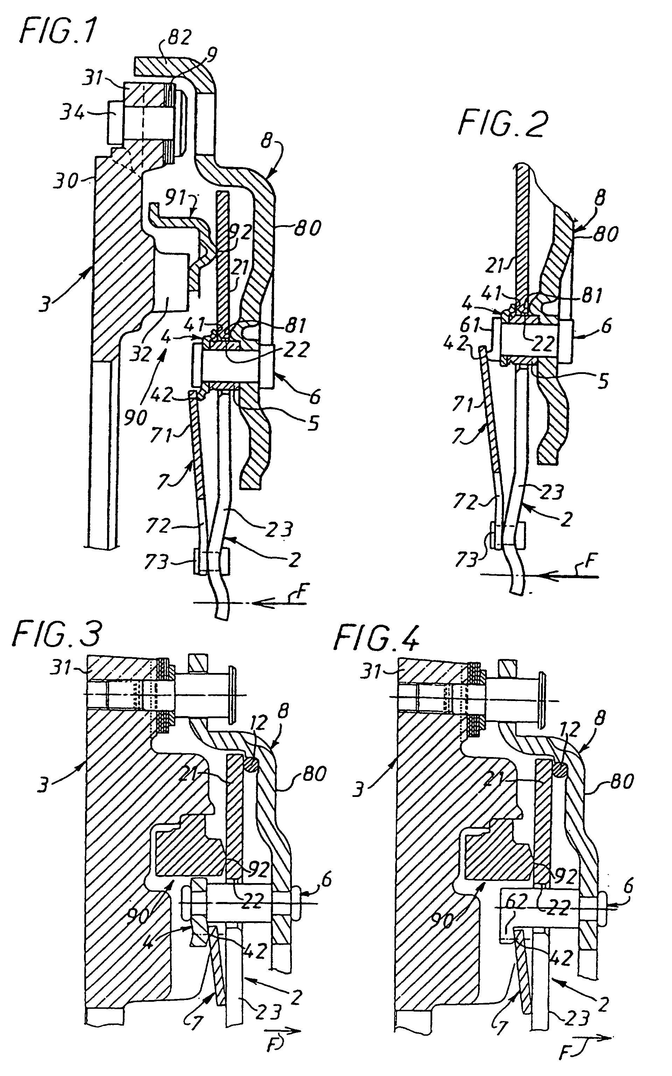

Un embrayage, dont le mécanisme est représenté sur la figure 1, comporte un ensemble de pièces de forme annulaire, à savoir successivement axialement un volant d'entraînement en rotation pour fixation de l'embrayage à un premier arbre, tel qu'un arbre menant, une friction d'embrayage présentant à sa périphérie externe des garnitures de friction et à sa périphérie interne un moyeu pour liaison en rotation de l'embrayage avec un second arbre tel qu'un arbre mené, un plateau de pression 3, un couvercle 8 ici de forme creuse présentant un fond 80 globalement d'orientation transversale troué centralement et, à sa périphérie externe, des moyens de fixation pour fixation du couvercle 8 au volant formant plateau de réaction.

Le volant présente dorsalement une face de friction et centralement des trous pour sa fixation à l'aide de vis à l'arbre menant. Le volant est d'un seul tenant en étant en matière moulable tout comme le plateau de pression 3 qui présente frontalement une face de friction 30 en regard de la face de friction du volant. Le volant et le plateau de pression 3 sont en fonte.

La friction d'embrayage présente également un disque de support pour porter les garnitures de friction, éventuellement fractionnées. Ces garnitures s'étendent de part et d'autre du disque de support en étant fixées à celui-ci par exemple par rivetage, par collage ou brasage au disque de support métallique.

De manière connue, des moyens élastiques de progressivité à action axiale sont interposés entre les deux garnitures pour serrage progressif de celles-ci entre le volant et le plateau de pression 3. Ces moyens peuvent avoir toute forme appropriée. Ces moyens sont par exemple réalisés en conformant le disque de support. Ce disque, à titre non limitatif, peut présenter une partie centrale pour sa liaison, de manière élastique ou non, au moyeu et une partie périphérique fragmentée en pales radiales, par exemple du type tripode. Chaque pale présente alors une zone centrale de portée destinée à la fixation de l'une des garnitures de friction et deux zones périphériques externes de portée destinées à coopérer avec l'autre des garnitures de friction.

Comme mentionné ci-dessus, le disque peut être accouplé de manière élastique au moyeu. En variante, le disque est accouplé de manière rigide au moyeu, le volant étant alors divisé pour présenter deux masses accouplées de manière élastique entre elles par des ressorts à action circonférentielle ou radiale. Pour plus de précisions, on se reportera au document GB-A-2 294 301 montrant (figures 35 et 36) un tel volant divisé ainsi que les garnitures de friction.

En variante, le volant peut être en deux parties et comporter un flasque de support fixé à sa périphérie interne à l'arbre menant et à sa périphérie externe à un plateau de réaction présentant la face de friction. Le couvercle 8 peut être alors assemblé au volant en deux parties à l'aide de pattes d'orientation axiale issues de sa jupe périphérique cylindrique 82. Ces pattes, en forme de tenons, sont alors engagées dans des mortaises formées à la périphérie externe du plateau de réaction ou du flasque de support. Le tronçon libre des pattes, formant les moyens de fixation précités du couvercle 8, peut être fixé par sertissage, rabattement ou soudage, au flasque ou au plateau de réaction, comme décrit par exemple dans la demande de brevet français 95 12523 déposée le 24 octobre 1995.

Ici, le couvercle 8 a une forme classique, tel que décrit par exemple dans le document FR-A-2 572 480. Plus précisément, la jupe 82 est fractionnée en entretoises en regard de plages d'appui dotées de trous de passage de vis de fixation du couvercle 8 au plateau de réaction.

S'agissant d'une application pour véhicule automobile, l'arbre menant est l'arbre moteur du véhicule sur le vilebrequin duquel se fixe le volant, tandis que l'arbre mené consiste en l'arbre d'entrée de la boite de vitesses. Bien entendu, il est possible d'inverser les structures, le premier arbre pouvant être un arbre mené et le deuxième arbre un arbre menant.

Sur cette figure, le plateau de pression 3 est lié en rotation avec le couvercle 8 par des languettes élastiques 9 permettant au plateau de pression 3 de se déplacer axialement par rapport au couvercle 8. Le plateau de pression 3 est donc solidaire en rotation du couvercle 8 et du volant, tout en étant mobile axialement par rapport à ceux-ci.

Les languettes 9 sont ici d'orientation tangentielle et sollicitent le plateau de pression 3 en direction du fond 80 du couvercle. Ces languettes 9 élastiques sont donc à action axiale et ont une action de rappel. En variante, les languettes peuvent être d'orientation radiale.

Les languettes 9 tangentielles sont fixées à l'une de leurs extrémités aux pattes 31 que présente en saillie radiale le plateau de pression 3 et à leur autre extrémité à une plage radiale du couvercle. Ces languettes 9 sont réparties régulièrement circonférentiellement, de manière connue ; leur nombre, ainsi que celui des pattes 31, dépend des applications, sachant que, pour les véhicules de tourisme, on fait généralement appel à trois languettes 9 ou groupes de languettes.

La fixation de ces languettes 9 sur les plages du couvercle et sur les pattes 31 est réalisée à l'aide d'organes de fixation 34, usuellement des rivets, en variante des vis ou des boulons.

Le plateau de pression 3 est déplaçable axialement sous la sollicitation de moyens embrayeurs à action axiale commandés par des moyens débrayeurs, ici un diaphragme 2 monté articulé sur le couvercle 8 ; le diaphragme 2, comme on le sait, comprend une partie périphérique 21 en forme de rondelle Belleville prolongée intérieurement par des doigts 23 séparés par des fentes radiales qui débouchent dans des trous 22 placés à la périphérie interne de la partie périphérique 21 du diaphragme 2.

Ici, l'embrayage est du type poussé, c'est-à-dire qu'il faut, à l'aide d'une butée de débrayage non représentée, agir en poussant sur l'extrémité interne des doigts 23, pour désengager l'embrayage, dans le sens correspondant à la flèche F. Pour ce faire, le fond 80 du couvercle 8 porte, d'une part, un appui primaire 81 consistant ici en un embouti réalisé dans le fond 80 du couvercle 8 et, d'autre part, un appui secondaire 41 constitué par un bord arrondi réalisé à la périphérie externe d'une rondelle jonc 4 solidarisée au couvercle 8 par des rivets 6, les appuis primaire 81 et secondaire 41 étant radialement au droit l'un de l'autre ; des douilles 5 entretoises sont placées axialement entre la rondelle jonc 4 et le fond 80 du couvercle 8 et sont traversées par le corps des rivets 6 ; les douilles 5 et donc les rivets 6 traversent certains des trous 22 du diaphragme 2. Bien entendu, la douille 5 est en un matériau dur permettant le rivetage des rivets 6 sans se déformer.

Pour assurer une parfaite constance de l'effort de serrage, le mécanisme d'embrayage est équipé d'un dispositif de rattrapage d'usure 90 ; le dispositif 90 a été décrit en détails dans la demande de brevet français FR-A-2 753 503 déposée le 17 Septembre 1996 à laquelle il conviendra de se reporter pour plus d'informations, la description correspondante devant être considérée comme faisant partie de la présente demande on rappellera simplement que le dispositif de rattrapage d'usure 90 comprend des moyens à rampes 91 ayant des rampés inclinées disposées circonférentiellement ; ils sont constitués d'un anneau en tôle découpée et emboutie de façon à présenter des rampes disposées circonférentiellement ; ledit anneau 91 présente également des zones d'appui 92 constituées par l'arête supérieure arrondie d'embouties en arcs de cercle centrés sur l'axe de l'embrayage et placés ici radialement à l'extérieur par rapport aux rampes. Le plateau de pression 3 présente, ici venus de moulage, sur sa face tournée vers le fond du couvercle 8, des plots 32 répartis circonférentiellement à une distance l'un de l'autre qui correspond à celle qui sépare circonférentiellement deux rampes successives, les plots 32 étant destinés. à coopérer chacun avec une rampe. Les moyens à rampes 91 sont placés axialement entre la partie périphérique 21 du diaphragme 2 et le plateau de pression 3 en sorte que les plots 32 reçoivent les rampes et la partie périphérique 21 du diaphragme 2 coopère avec les zones d'appui 92 qui constituent ainsi les moyens d'appui par l'intermédiaire desquels le diaphragme 2 agit sur le plateau de pression 3.

Une rondelle élastique d'assistance 7 prend appui, d'un côté, sur un élément fixe par rapport au couvercle 8 et, de l'autre côté, sur les doigts 23 du diaphragme 2 en sorte qu'elle est adaptée à agir dans le sens du débrayage de l'embrayage.

Plus précisément, et selon l'invention, la rondelle d'assistance 7 est disposée axialement entre le diaphragme 2 et le plateau de pression 3, en étant placée radialement au droit des doigts 23 du diaphragme 2, globalement radialement à l'intérieur de la zone délimitée par les trous 22 du diaphragme 2 ; ici, la rondelle d'assistance 7 comprend une partie externe rondelle Belleville 71 prolongée radialement vers l'axe selon des extensions 72 séparées par des fentes radiales ; ces extensions 72 s'étendent globalement vers l'extrémité libre des doigts 23 du diaphragme 2 auxquels elles sont fixées, par exemple par des rivets 73.

Ici, la périphérie externe de la partie rondelle Belleville 71 de la rondelle d'assistance 7 est en appui sur un bord arrondi 42 qui fait face au plateau de pression 3 et que présente le bord interne de la rondelle jonc 4.

La rondelle d'assistance 7 a des caractéristiques élastiques telles que, lorsque l'embrayage est embrayé et que les garnitures du disque de friction sont neuves, elle ne génère aucun effort axial sur les doigts 23 du diaphragme 2 ; l'effort de serrage des garnitures pincées entre le plateau de réaction et le plateau de pression 3 est celui qui est donné par la partie périphérique 21 du diaphragme 2 ; lorsque l'on agit sur les doigts 23 du diaphragme 2 dans le sens de la flèche F, pour le débrayage de l'embrayage, la rondelle d'assistance 7 agit en traction sur les doigts 23 du diaphragme 2, au niveau des rivets 73 dans le sens de la flèche F, en prenant appui sur le couvercle 8 par l'intermédiaire de la rondelle jonc 4 et de la douille 5, soulageant ainsi l'effort nécessaire au débrayage ; on s'arrange également pour qu'en fin d'opération de débrayage, correspondant par exemple à la venue en butée de la partie externe 21 du diaphragme 2 contre le fond 80 du couvercle 8, la rondelle d'assistance 7 ne transmette aucun effort au diaphragme 2.

Grâce à la présence du dispositif de rattrapage d'usure 90, les positions du diaphragme 2 et de la rondelle d'assistance 7, à l'embrayage et au débrayage, sont fixes, indépendantes de l'usure des garnitures : l'assistance au débrayage fournie par la rondelle d'assistance 7 est donc indépendante de cette usure, ainsi que l'effort de serrage.

Comme on le voit, grâce à l'invention, une rondelle d'assistance 7 a été associée à un diaphragme et à un dispositif de rattrapage d'usure sans qu'il soit nécessaire de modifier le couvercle 8 ; par ailleurs, celle-ci a été placée dans un espace libre entre le plateau de pression 3 et le diaphragme 2 et sa présence n'a pas affecté l'encombrement axial du mécanisme d'embrayage.

Selon la variante de la figure 2, l'appui 42 de la rondelle d'assistance 7 n'est pas porté par la rondelle jonc 4 mais ici par la tête 61 des rivets 6 conformée en conséquence, des moyens d'indexation des rivets, non représentés, étant prévus.

La figure 3 montre l'application de l'invention à un embrayage du type tiré ; sur cette figure, les pièces identiques à celles des variantes précédentes, ou jouant le même rôle, portent les mêmes références. L'embrayage étant du type tiré, le diaphragme 2 est en appui sur le couvercle 8 par sa périphérie externe, ici par l'intermédiaire d'un jonc 12, et ses deux appuis 12 et 92 sont radialement inversés : le débrayage de l'embrayage est obtenu en agissant sur les extrémités des doigts 23 du diaphragme 2 dans le sens de la flèche F de la figure 3.

Bien entendu, le dispositif de rattrapage d'usure peut être du type de celui décrit dans le document GB-A-2 294 301 notamment figures 29 à 33.

Ici, le bord 42 de la rondelle jonc 4, sur lequel prend appui la rondelle d'assistance 7, fait face au diaphragme 2, la rondelle d'assistance 7 agissant en compression entre les doigts 23 du diaphragme 2 et ledit bord 42.

Ici, les rivets 6 solidarisant la rondelle jonc 4 au fond 80 du couvercle 8 sont doublement épaulés, un épaulement étant prévu a chacune des extrémités de leur corps qui traverse les trous 22 du diaphragme 2.

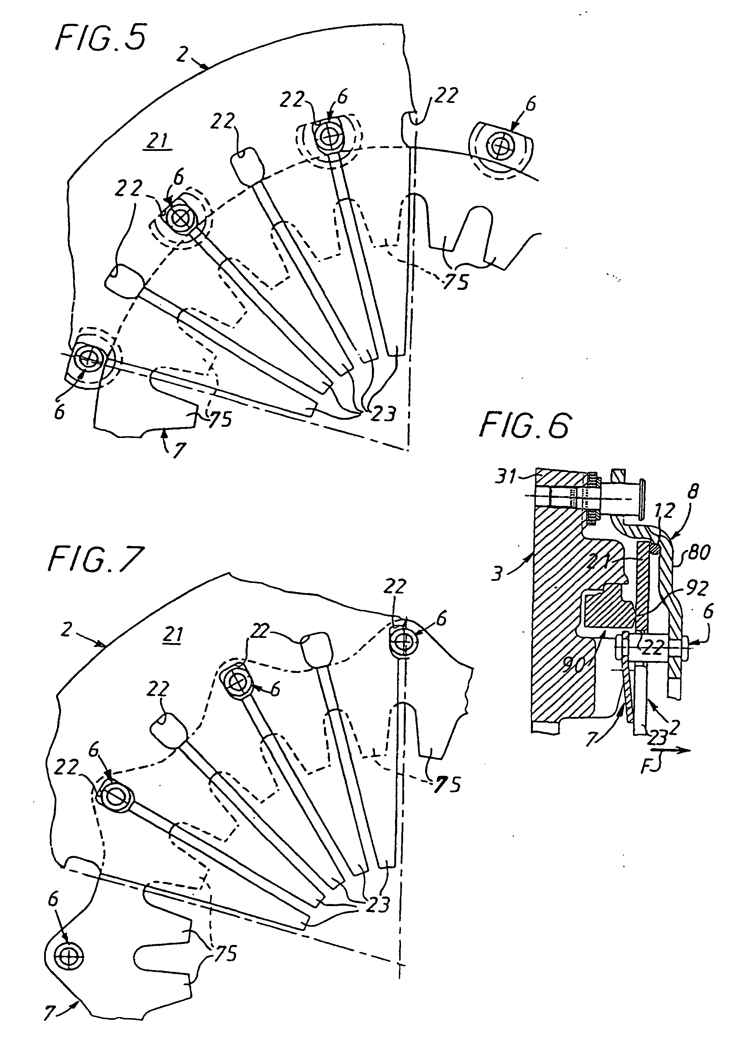

Selon la variante de la figure 4, les rivets 6 sont en forme de colonnettes ; ils n'ont qu'un seul épaulement côté couvercle 8 et présentent une tête 62 conformée en sorte de porter le bord arrondi 42 qui fait face au fond 80 du couvercle 8 ; comme le montre la figure 5, la rondelle d'assistance 7 est découpée à sa périphérie interne pour constituer des dents 75 ; avantageusement, il y a autant de dents 75 que de doigts 23 de diaphragme avec lesquels coopèrent les dents 75. Cette disposition est également possible pour les variantes des figures 3 et 4.

Selon la variante des figures 6 et 7, la rondelle d'assistance 7 est solidarisée, par sa périphérie externe, aux rivets 6 par rivetage.

Bien entendu, le dispositif de rattrapage d'usure peut avoir n'importe quelle forme.

Ainsi, ce dispositif peut présenter des rampes portant une denture engrenant avec une vis sans fin comme décrit dans la demande de brevet français déposée le 17 Septembre 1996 sous le numéro 96 1 1297.

Il peut comporter des ressorts intervenant entre les rampes et des contre-rampes, remplaçant les plots 32, comme décrit dans le document EP-A-O 622 559.

## Revendications

1. Mécanisme d'embrayage pour embrayage à friction, notamment pour véhicules automobiles, comportant un couvercle (8) avec un fond (80) d'orientation transversale et des moyens de fixation pour fixation du mécanisme d'embrayage sur un volant d_{'}entraînement: en rotation, un plateau de pression (3) présentant frontalement une face de friction (30) pour coopération avec une friction d'embrayage, des moyens (9) pour liaison en rotation, avec mobilité axiale, du plateau de pression (3) avec le couvercle (8), et, interposé entre le plateau de pression (3) et le fond (80) du couvercle (8), un diaphragme (2) ayant une partie périphérique externe (21) sollicitant axialement le plateau de pression (3) en direction opposée du fond (80) du couvercle (8) et prolongée vers l'intérieur par des doigts (23) pour contrecarrer à volonté l'action de ladite partie périphérique (21), une rondelle élastique d'assistance (7) agissant sur les doigts (23)- du diaphragme (2) dans le sens du débrayage en prenant appui sur le couvercle (8), le mécanisme étant équipé d'un dispositif de rattrapage d'usure (90) d'au moins des garnitures de la friction d'embrayage, **caractérisé par le fait que** la rondelle d'assistance (7) est disposée axialement entre le plateau de pression (3) et le diaphragme (2),
les caractéristiques élastiques de la rondelle d'assistance (7) étant choisies en sorte que, lorsque l'embrayage est embrayé, la friction d'embrayage étant neuve, l'action exercée par la rondelle d'assistance (7) est très faible, voire nulle,
et en sorte que, pendant l'opération de débrayage, l'action exercée par la rondelle d'assistance (7) croît puis décroît jusqu'à une valeur très faible voire nulle l'embrayage étant débrayé.

2. Mécanisme selon la revendication 1, dans lequel les doigts (23) du diaphragme (2) sont séparés par des fentes radiales qui débouchent dans des trous (22) placés à la périphérie interne de la partie périphérique (21) du diaphragme 2, **caractérisé par le fait que** la rondelle d'assistance (7) est située globalement radialement à l'intérieur de la zone délimitée par les trous (22) du diaphragme (2).

3. Mécanisme selon la revendication 2, **caractérisé par le fait que** la rondelle d'assistance (7) prend appui sur le couvercle (8) par l'intermédiaire d'une rondelle jonc (4) solidarisée au fond (80) du couvercle (8) par des rivets (6) qui traversent des trous (22) du diaphragme (2).

4. Mécanisme selon la revendication 3, dans lequel l'embrayage est du type poussé, **caractérisé par le fait que** la rondelle d'assistance (7) prend appui sur un bord (42) qui fait face au plateau de pression (3) et que présente la rondelle jonc (4) à sa périphérie interne, et est fixée aux doigts (23) du diaphragme (2), par exemple par des rivets (73).

5. Mécanisme selon la revendication 3, dans lequel l'embrayage est du type tiré, **caractérisé par le fait que** la rondelle d'assistance (7) prend appui sur un bord (42) qui fait face au fond (80) du couvercle (8) et que présente la rondelle jonc (4) à sa périphérie interne.

6. Mécanisme selon la revendication 2, **caractérisé par le fait que** la rondelle d'assistance (7) prend appui sur le couvercle (8) par l'intermédiaire des têtes (61, 62) de rivets qui traversent des trous (22) du diaphragme (2).

7. Mécanisme selon la revendication 6, dans lequel l'embrayage est du type poussé, **caractérisé par le fait que** la rondelle d'assistance (7) prend appui sur un bord (42) qui fait face au plateau de pression (3) et que présente les têtes (61) des rivets (6).

8. Mécanisme selon la revendication 6, dans lequel l'embrayage est du type tiré, **caractérisé par le fait que** la rondelle d'assistance (7) prend appui sur un bord (42) qui fait face au fond (80) du couvercle (8) et que présente les têtes (61 ) des rivets (6).

9. Mécanisme selon la revendication 6, dans lequel l'embrayage est du type tiré, **caractérisé par le fait que** la rondelle d'assistance (7) est solidaire des rivets (6) par sa périphérie externe.

10. Mécanisme selon la revendication 2, **caractérisé par le fait que** la rondelle d'assistance est découpée à sa périphérie interne pour constituer des dents (75) coopérant avec les doigts (23) du diaphragme (2).

## Patentansprüche

1. Kupplungsmechanismus für eine Reibungskupplung, insbesondere für Kraftfahrzeuge, umfassend einen Deckel (8) mit einem quer ausgerichteten Boden (80) und Befestigungsmitteln zur Befestigung des Kupplungsmechanismus an einem Drehantriebsschwungrad, eine Druckplatte (3), die stirnseitig eine Reibfläche (30) für das Zusammenwirken mit einer Reibungskupplungsscheibe aufweist, Mittel (9) für die, axial bewegliche, drehfeste Verbindung der Druckplatte (3) mit dem Deckel (8) und, eingefügt zwischen der Druckplatte (3) und dem Boden (80) des Deckels (8), eine Membranfeder (2) mit einem äußeren Umfangsteil (21), der die Druckplatte (3) in entgegengesetzter Richtung zum Boden (80) des Deckels (8) axial beaufschlagt und der nach innen durch Finger (23) verlängert wird, um der Wirkung des besagten Umfangsteils (21) beliebig entgegenzuwirken, wobei eine Unterstützungsfederscheibe (7) in der Ausrückrichtung auf die Finger (23) der Membranfeder (2) einwirkt, indem sie auf dem Deckel (8) zur Auflage kommt, und wobei der Mechanismus mit einer Verschleißnachstellvorrichtung (90) wenigstens für die Reibbeläge der Reibungskupplungsscheibe ausgerüstet ist, **dadurch gekennzeichnet, dass** die Unterstützungsfederscheibe (7) axial zwischen der Druckplatte (3) und der Membranfeder (2) angeordnet ist, wobei die Elastizitätseigenschaften der Unterstützungsfederscheibe (7) so gewählt sind, dass bei eingerückter Kupplung und bei neuer Reibungskupplungsscheibe die durch die Unterstützungsfederscheibe (7) ausgeübte Kraft sehr gering bzw. gleich null ausfällt, und wobei die Elastizitätseigenschaften der Unterstützungsfederscheibe (7) so gewählt sind, dass während des Ausrückvorgangs die durch die Unterstützungsfederscheibe (7) ausgeübte Kraft ansteigt und danach bis zu einem Wert abfällt, der sehr gering bzw. gleich null ausfällt, wenn die Kupplung ausgerückt ist.

2. Mechanismus nach Anspruch 1, bei dem die Finger (23) der Membranfeder (2) durch radiale Schlitze getrennt sind, die in am inneren Umfang des Umfangsteils (21) der Membranfeder (2) angeordneten Löchern münden, **dadurch gekennzeichnet, dass** sich die Unterstützungsfederscheibe (7) insgesamt radial innerhalb des durch die Löcher (22) der Membranfeder (2) begrenzten Bereichs befinden.

3. Mechanismus nach Anspruch 2, **dadurch gekennzeichnet, dass** die Unterstützungsfederscheibe (7) auf dem Deckel (8) über eine Ringscheibe (4) zur Auflage kommt, die mit dem Boden (80) des Deckels (8) durch Niete (6) fest verbunden ist, die durch Löcher (22) der Membranfeder (2) hindurchgehen.

4. Mechanismus nach Anspruch 3, bei dem die Kupplung in gedrückter Konstruktion ausgeführt **ist, dadurch gekennzeichnet , dass** die Unterstützungsfederscheibe (7) auf einer Kante (42) zur Auflage kommt, die der Druckplatte (3) gegenüberliegt und die die Ringscheibe (4) an ihrem inneren Umfang aufweist, wobei sie an den Fingern (23) der Membranfeder (2), beispielsweise durch Niete (73), befestigt ist.

5. Mechanismus nach Anspruch 3, bei dem die Kupplung in gezogener Konstruktion ausgeführt **ist, dadurch gekennzeichnet, dass** die Unterstützungsfederscheibe (7) auf einer Kante (42) zur Auflage kommt, die dem Boden (80) des Deckels (8) gegenüberliegt und die die Ringscheibe (4) an ihrem inneren Umfang aufweist.

6. Mechanismus nach Anspruch 2, **dadurch gekennzeichnet, dass** die Unterstützungsfederscheibe (7) auf dem Deckel (8) über Köpfe (61, 62) von Nieten zur Auflage kommt, die durch Löcher (22) der Membranfeder (2) hindurchgehen.

7. Mechanismus nach Anspruch 6, bei dem die Kupplung in gedrückter Konstruktion ausgeführt ist, **dadurch gekennzeichnet, dass** die Unterstützungsfederscheibe (7) auf einer Kante (42) zur Auflage kommt, die der Druckplatte (3) gegenüberliegt und die die Köpfe (61) der Niete (6) aufweisen.

8. Mechanismus nach Anspruch 6, bei dem die Kupplung in gezogener Konstruktion ausgeführt **ist, dadurch gekennzeichnet, dass** die Unterstützungsfederscheibe (7) auf einer Kante (42) zur Auflage kommt, die dem Boden (80) des Deckels (8) gegenüberliegt und die die Köpfe (61) der Niete (6) aufweisen.

9. Mechanismus nach Anspruch 6, bei dem die Kupplung in gezogener Konstruktion ausgeführt ist, **dadurch gekennzeichnet, dass** die Unterstützungsfederscheibe (7) durch ihren äußeren Umfang fest mit den Nieten (6) verbunden ist.

10. Mechanismus nach Anspruch 2, **dadurch gekennzeichnet, dass** die Unterstützungsfederscheibe an ihrem inneren Umfang eingeschnitten ist, um Zähne (75) zu bilden, die mit den Fingern (23) der Membranfeder (2) zusammenwirken.

## Claims

1. A clutch mechanism for friction clutches, in particular for motor vehicles, including a cover (8) with a transversely oriented back (80) and fixing means for fixing the clutch mechanism to a rotational drive flywheel, a pressure plate (3) having a front friction face (30) to cooperate with a clutch friction disc, means (9) for rotationally coupling the pressure plate (3) to the cover (8), allowing axial movement, and, disposed between the pressure plate (3) and the back (80) of the cover (8), a diaphragm (2) having an outside peripheral part (21) urging the pressure plate (3) axially away from the back (80) of the cover (8) and extended inwardly by fingers (23) to oppose selectively the action of said peripheral part (21), an assistance spring washer (7) bearing on the cover (8) and operating on the fingers (23) of the diaphragm (2) in the clutch release direction, the mechanism being equipped with a wear compensator device (90) for compensating wear of at least the friction linings of the clutch friction disc, **characterised in that** the assistance washer (7) is disposed axially between the pressure plate (3) and the diaphragm (2), the spring characteristics of the assistance washer (7) are chosen so that when the clutch is engaged and the clutch friction disc is new the action exerted by the assistance washer (7) is very low or even zero, and so that the action exerted by the assistance washer (7) during clutch release increases and then decreases to a very low or even zero value when the clutch is released.

2. A mechanism according to claim 1 wherein the fingers (23) of the diaphragm (2) are separated by radial slots that open into holes (22) at the inside periphery of the peripheral part (21) of the diaphragm (2) **characterised in that** the assistance washer (7) is globally radially inside the area delimited by the holes (22) in the diaphragm (2).

3. A mechanism according to claim 2 **characterised in that** the assistance washer (7) bears on the cover (8) through the intermediary of a ring washer (4) attached to the back (80) of the cover (8) by rivets (6) that pass through holes (22) in the diaphragm (2).

4. A mechanism according to claim 3 wherein the clutch is of the push type and **characterised in that** the assistance washer (7) bears on an edge (42) on the inside periphery of the ring washer (4) and facing the pressure plate (3) and is fixed to the fingers (23) of the diaphragm (2), for example by rivets (73).

5. A mechanism according to claim 3 wherein the clutch is of the pull type and **characterised in that** the assistance washer (7) bears on an edge (42) at the inside periphery of the ring washer (4) and facing the back (80) of the cover (8).

6. A mechanism according to claim 2 **characterised in that** the assistance washer (7) bears on the cover (8) through heads (61, 62) of rivets that pass through holes (22) in the diaphragm (2).

7. A mechanism according to claim 6 wherein the clutch is of the push type and **characterised in that** the assistance washer (7) bears on an edge (42) that faces the pressure plate (3) and is provided on the heads (61) of the rivets (6).

8. A mechanism according to claim 6 wherein the clutch is of the pull type and **characterised in that** the assistance washer (7) bears on an edge (42) that faces the back (80) of the cover (8) and is provided on the heads (61) of the rivets (6).

9. A mechanism according to claim 6 wherein the clutch is of the pull type and **characterised in that** the outside periphery of the assistance washer (7) is attached to the rivets (6).

10. A mechanism according to claim 2 **characterised in that** the inside periphery of the assistance washer is cut out to constitute teeth (75) co-operating with the fingers (23) of the diaphragm (2).
